# EUROPEAN PATENT SPECIFICATION

(11) **EP 4 416 044 B1**
(45) Date of publication and mention of the grant of the patent: **02.12.2026**
(21) Application number: 21794512.0
(22) Date of filing: 14.10.2021
(51) Int. Cl.: B63B 7/08, B63B 35/44

(54) **FLOATING ASSEMBLY FOR GENERATING SOLAR POWER**
SCHWIMMENDE ANORDNUNG ZUR ERZEUGUNG VON SOLARENERGIE
ENSEMBLE FLOTTANT POUR GÉNÉRER DE L'ÉNERGIE SOLAIRE

(43) Date of publication of application: 21.08.2024
(73) Proprietor: Bluewater Energy Services B.V., 2132 LS Hoofddorp (NL)
(72) Inventor: VAN DER NAT, Clemens Gerardus Johannes Maria, 2492 MR Den Haag (NL); VAN DEN BERG, Bastiaan Bernardus, 2201 XB Noordwijk (NL)
(74) Representative: De Vries & Metman
(86) International application number: PCT/EP2021/078473
(87) International publication number: WO 2023/061597

(56) References cited:
- WO-A1-2013/178202
- US-A1- 2016 156 304
- US-A1- 2018 034 408

## Description

The invention relates to a floating assembly for generating solar power, comprising a floating gas-filled flexible element, with an upper wall part, a lower wall part and a surrounding wall part connecting corresponding outer edges of the upper and lower wall parts, wherein, as considered in an operational position of the flexible element when floating on a water surface, the vertical dimension of the flexible element is smaller than its horizontal dimensions, and further with one or more solar panels resting on top of the upper wall part and with mooring lines extending between the flexible element and one or more fixed mooring points. Such a floating assembly is for example known from US 2016/156304 A1.

Within the context of the present invention the expression "fixed mooring point" merely intends to indicate a mooring point which in general has a substantially fixed geographical location, but which however in certain instances could be capable of limited movements (such as oscillations) around that fixed location. Such a fixed mooring point also may comprise some kind of mooring structure provided below the water surface which in general has a fixed position (apart from a possible capability to move in a limited sense in accordance with loads -such as currents and waves- applied thereto).

The floating gas-filled flexible element for example can be embodied as a substantially flat or slightly curved, air-filled mattress-like element. Without precisely defining the structure of the flexible element (which is not relevant for understanding the present invention) it, in a general sense, may be noted that in certain embodiments the element comprises double stitched fabrics defining the wall parts and that the upper and lower wall parts (which can comprise a number of fabric layers) are connected using multiple wires as threads or strands in such numbers (and thus density) that the upper surface of the upper wall part becomes sufficiently flat for the attachment of the one or more solar panels (for example using Velcro or glue). In its operational position the element can be inflated with a pressure to make the element sufficiently stiff (for example allowing persons to walk on the element) but still sufficiently flexible to respond to waves with limited wave loading. Preferably the solar panel(s) are of a flexible type, e.g. thin film solar cells.

Special care should be taken that the element, once in its operational position on the water surface, remains in such a position. This, however, may be troublesome, because the element has a very limited weight and draught and, especially in windy conditions (and/or in conditions with waves and/or current), wind very easily can enter beneath the element, such that it is lifted. This may lead to very high stresses in the element and in the mooring lines, whereas moreover the desired position of the element with respect to an optimised functioning of the solar panel(s) is lost.

In view of this drawback, it is an object of the present invention to provide an improved floating assembly.

Thus, in accordance with the present invention a floating assembly of the above mentioned type is provided in which the flexible element, at its surrounding wall part, is provided with a skirt which extends substantially downwards from the surrounding wall part towards a position below the level of the lower wall part, as considered in the operational position of the flexible element when floating on said water surface, which skirt is adapted for preventing wind from entering below the flexible element.

The provision of such a skirt dramatically lowers the risk of the wind entering below the element and lifting it and thus the optimal position (and shape) of the flexible element can be assured more easily.

In the floating assembly according to the present invention, the skirt comprises a skirt with a first edge that is connected to the surrounding wall part of the flexible element and with a second edge that also is connected to the flexible element for defining an enclosure for housing ballast water. As long as it remains in position while subjected to currents and wave loading such a water-filled enclosure also can define a very effective wind barrier preventing uplift by wind.

It is possible, then, that the enclosure is fully sealed. This means that the ballast water inside the enclosure cannot exit the enclosure.

However, it is conceivable too that the skirt is provided with openings for the passage of water through the skirt into and out of the enclosure. This may be favourable because such openings allow for filling of the enclosure during installation and for re-filling during operation of the floating assembly.

In one embodiment, the second edge of the skirt also is connected to the surrounding wall part at the same location as the first edge for defining a substantially teardrop shaped enclosure. Such a teardrop shape offers the advantage that at the location of the connection of the skirt to the surrounding wall part shear forces rather than peeling forces occur.

Preferably, the mooring lines are attached to said skirt, and preferably to an outer skirt part thereof ('outer' being defined with respect to the flexible element, thus facing away from the flexible element). This may ensure that the enclosure can re-fill, especially in an embodiment in which the ballast water can flow in and out through the openings.

Other configurations of the skirt are conceivable too. Thus, in one embodiment the second edge of the skirt may be connected to the lower wall part of the flexible element at a location inwardly from the surrounding wall part.

In such an embodiment it is possible that at a position between its first and second edges the skirt is provided with ballast weights, which again may help to keep the enclosure in an effective shape.

Furthermore, in such an embodiment the mooring lines may be attached to the surrounding wall part.

When no ballast weights are provided, the mooring lines may be attached to the skirt at a position between the first and second edges.

It is also conceivable that the mooring lines are bifurcated for defining a first fork attached to the skirt at said position between the first and second edges and a second fork attached to the surrounding wall part of the flexible element, wherein preferably the first fork has a lower stiffness than the second fork.

Hereinafter the invention will be elucidated while referring to the drawings in which:
Figures 1 and 2 show floating assemblies which are not part of the invention. Figures 3-7 show different embodiments of the floating assembly, each represented schematically in a partial longitudinal cross section, and
Figure 8 schematically shows a complete flexible element in a perspective view.

Referring to the figures, a number of different embodiments of a floating assembly for generating solar power are illustrated. Common for all embodiments is the provision of a floating gas-filled (e.g. air-filled) flexible element 10, comprising (or made of) an upper wall part 1, a lower wall part 2 and a surrounding wall part 3 connecting corresponding outer edges or parts of the upper and lower wall parts. The upper wall part 1 and lower wall part 2 moreover can be connected by a plurality of wires or alike members extending in the interior of the flexible element 10. Because such members are not relevant for understanding the present invention, they are not shown. Together, the wall parts define an interior space which can be pressurised to a desired pressure, offering the flexible element a certain amount of rigidity (notwithstanding it flexibility which allows it to, at least partially, conform to waves) and the desired amount of buoyancy.

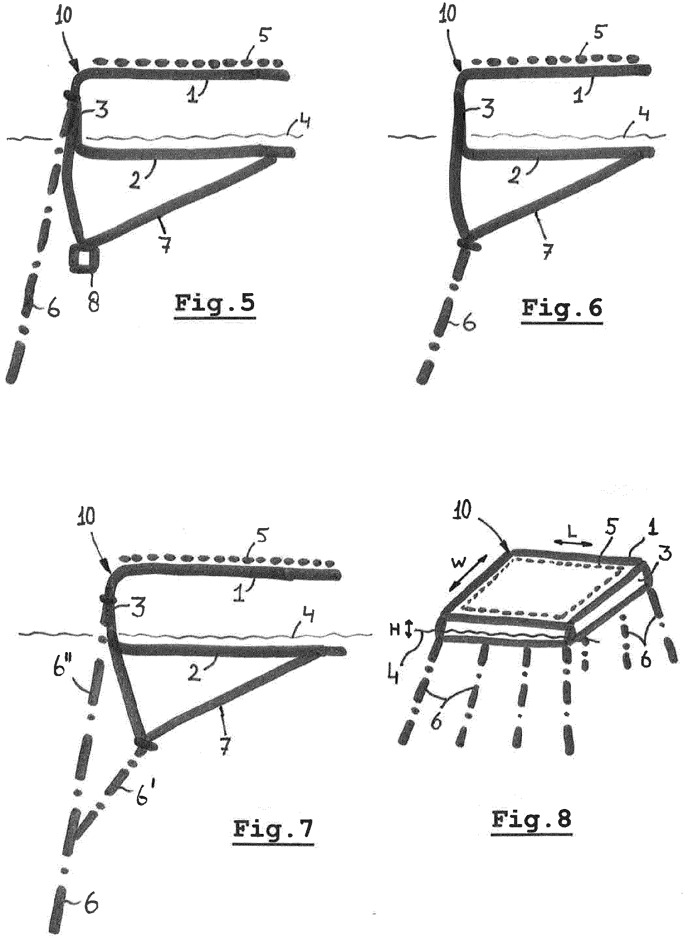

Generally, the flexible element 10 will have such dimensions, as considered in an operational position of the flexible element when floating on a water surface 4, that the vertical dimension H of the flexible element is smaller than its horizontal dimensions L and W (see figure 8).

One or more solar panels 5 rest on top of the upper wall part 1 and may be attached thereto in any convenient manner (for example in a removable manner by Velcro or in a permanent manner by gluing). Because of the flexibility of the flexible element 10 the solar panels 5 generally also will be flexible and for example may comprise thin film solar cells.

The floating assembly further is provided with a number of mooring lines 6 extending between the flexible element 10 and one or more fixed mooring points or a mooring structure (not illustrated) below the water surface 4. Again, for understanding the present invention the details of such mooring points or mooring structure are not relevant, and thus are not elucidated here. The location where such mooring lines 6 are attached to the flexible element 10 may vary and, in general, will depend on the specific embodiment, as will follow below.

The invention resides in the fact that the flexible element 10, at or in the vicinity of its surrounding wall part 3, is provided with a skirt 7 which extends substantially downwards from the surrounding wall part 3 towards a position below the level of the lower wall part 2, as shown in the embodiments described below, as considered in the operational position of the flexible element when floating on said water surface. Such a skirt 7 is adapted for preventing wind from entering below the flexible element 10 and (at least partially) lifting the flexible element.

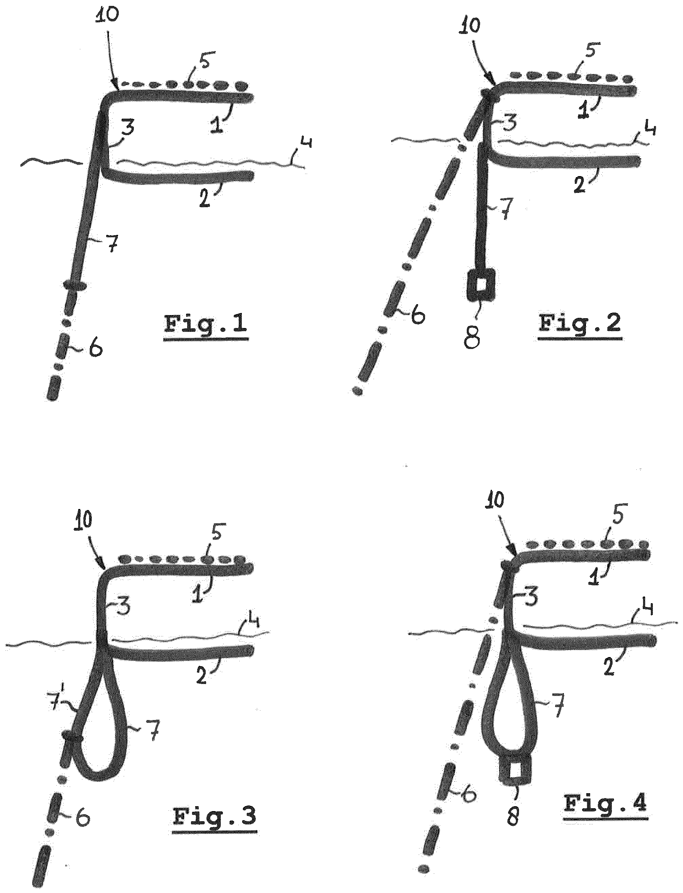

Figure 1 shows a floating assembly which is not part of the invention, in which the skirt 7 comprises an upper edge that is connected to the surrounding wall part 3 and a free lower edge to which the mooring lines 6 are connected. The upper edge of the skirt 7 may be connected to an upper region of the surrounding wall part 3.

Figure 2 shows a floating assembly which is not part of the invention, in which the skirt 7 additionally is provided with ballast weights 8 (only a single one being illustrated), which preferably are attached at or near to the free lower edge of the skirt. The mooring lines 6, in such an embodiment, are attached to the surrounding wall 3 (or any other appropriate portion of the flexible element 10).

Conceivable too is that the mooring lines 6 are attached to the skirt 7 at or near to the location of the ballast weight 8.

Figures 3-7 illustrate embodiments in which the skirt 7 comprises a skirt with a first edge that is connected to the surrounding wall part 3 of the flexible element 10 and with a second edge that also is connected to the flexible element 10 for defining an enclosure for housing ballast water. Such an enclosure may or may not be sealed (in the latter case the skirt 7 may be provided with openings -not illustrated- for the passage of water through the skirt into and out of the enclosure).

Specifically, figure 3 relates to an embodiment in which said second edge of the skirt 7 also is connected to the surrounding wall part 3 at the same location as the first edge, for defining a substantially teardrop shaped enclosure. In such an embodiment the mooring lines 6 may be attached to said skirt, and preferably to an outer skirt part 7' thereof.

Figure 4 illustrates the possibility to add a ballast weight 8 at a lower part of the skirt 7, while connecting the mooring lines 6 directly to the surrounding wall part 3 (or any other convenient part of the flexible element 10).

The embodiments according to figures 5-7 have in common that the second edge of the skirt 7 is connected to the lower wall part 2 of the flexible element 10 at a location inwardly from the surrounding wall part 3.

In the embodiment according to figure 5 the skirt 7 is provided with ballast weights 8 at a position between its first and second edges. In such an embodiment the mooring lines 6 preferably are attached to the surrounding wall part 3.

In the embodiment according to figure 6 the mooring lines 6 are attached to the skirt 7 at a position between the first and second edges (and ballast weights are not provided).

Finally, figure 7 illustrates an embodiment in which the mooring lines 6 are bifurcated for defining a first fork 6' attached to the skirt 7 at said position between the first and second edges and a second fork 6" attached to the surrounding wall part 3 of the flexible element 10. Fork 6' may have a significantly lower stiffness than fork 6".

The invention is not limited to the embodiments described which may be varied widely within the scope of the invention as defined by the appending claims.

## Claims

1. Floating assembly for generating solar power, comprising a floating gas-filled flexible element (10), with an upper wall part (1), a lower wall part (2) and a surrounding wall part (3) connecting corresponding outer edges of the upper and lower wall parts, wherein, as considered in an operational position of the flexible element when floating on a water surface (4), the vertical dimension of the flexible element is smaller than its horizontal dimensions, and further with one or more solar panels (5) resting on top of the upper wall part and with mooring lines (6) extending between the flexible element and one or more fixed mooring points, wherein the flexible element, at its surrounding wall part, is provided with a skirt (7) which extends substantially downwards from the surrounding wall part towards a position below the level of the lower wall part, as considered in the operational position of the flexible element when floating on said water surface, which skirt is adapted for preventing wind from entering below the flexible element and wherein the skirt comprises a skirt with a first edge that is connected to the surrounding wall part of the flexible element and with a second edge that also is connected to the flexible element for defining an enclosure for housing ballast water, **characterized in that** (a) the second edge of the skirt also is connected to the surrounding wall part at the same location as the first edge for defining a substantially teardrop shaped enclosure, or that (b) the second edge of the skirt is connected to the lower wall part of the flexible element at a location inwardly from the surrounding wall part.

2. Floating assembly according to claim 1, wherein the enclosure is fully sealed.

3. Floating assembly according to claim 1, wherein the skirt is provided with openings for the passage of water through the skirt into and out of the enclosure.

4. Floating assembly according to claim 1, option (a), wherein the mooring lines are attached to said skirt, and preferably to an outer skirt part thereof.

5. Floating assembly according to claim 1, option (b), wherein at a position between its first and second edges the skirt is provided with ballast weights.

6. Floating assembly according to claim 5, wherein the mooring lines are attached to the surrounding wall part.

7. Floating assembly according to claim 1, option (b), wherein the mooring lines are attached to the skirt at a position between the first and second edges.

8. Floating assembly according to claim 7, wherein the mooring lines are bifurcated for defining a first fork attached to the skirt at said position between the first and second edges and a second fork attached to the surrounding wall part of the flexible element, wherein preferably the first fork has a lower stiffness than the second fork.

## Patentansprüche

1. Schwimmende Baugruppe zur Erzeugung von Solarenergie,
aufweisend ein schwimmendes gasgefülltes flexibles Element (10) mit einem oberen Wandteil (1), einem unteren Wandteil (2) und einem umgebenden Wandteil (3), der korrespondierende Außenränder des oberen und des unteren Wandteils verbindet, wobei, wenn in einer Betriebsposition des flexiblen Elements betrachtet, wenn es auf einer Wasserfläche (4) schwimmt, die vertikale Abmessung des flexiblen Elements kleiner ist als seine horizontalen Abmessungen ist, und ferner mit einem oder mehreren Solarpaneelen (3), die auf der Oberseite des oberen Wandteils aufliegen, und mit Festmachleinen (6), die sich zwischen dem flexiblen Element und einem oder mehreren festen Festmachpunkten erstrecken, wobei das flexible Element an seinem umgebenden Wandteil mit einer Schürze (7) versehen ist, die sich von dem umgebenden Wandteil aus im Wesentlichen nach unten zu einer Position unterhalb des Niveaus des unteren Wandteils erstreckt, wenn in der Betriebsposition des flexiblen Elements betrachtet, wenn es auf der Wasserfläche schwimmt, wobei die Schürze angepasst ist, um zu verhindern, dass Wind unter das flexible Element eintritt, und wobei die Schürze eine Schürze mit einem ersten Rand, der mit dem umgebenden Wandteil des flexiblen Elements verbunden ist, und mit einem zweiten Rand aufweist, der ebenfalls mit dem flexiblen Element verbunden ist, um eine Umschließung zur Aufnahme von Ballastwasser zu definieren, **dadurch gekennzeichnet, dass** (a) der zweite Rand der Schürze ebenfalls mit dem umgebenden Wandteil an der gleichen Stelle wie der erste Rand verbunden ist, um eine im Wesentlichen tränenförmige Umschließung zu definieren, oder dass (b) der zweite Rand der Schürze mit dem unteren Wandteil des flexiblen Elements an einer Stelle innerhalb des umgebenden Wandteils verbunden ist.

2. Schwimmende Baugruppe gemäß Anspruch 1, wobei die Umschließung vollständig abgedichtet ist.

3. Schwimmende Baugruppe gemäß Anspruch 1, wobei die Schürze mit Öffnungen für den Durchgang von Wasser durch die Schürze in die und aus der Umschließung versehen ist.

4. Schwimmende Baugruppe gemäß Anspruch 1, Option (a), wobei die Festmachleinen an der Schürze und vorzugsweise an einem äußeren Schürzenteil davon befestigt sind.

5. Schwimmende Baugruppe gemäß Anspruch 1, Option (b), wobei die Schürze an einer Position zwischen ihrem ersten und zweiten Rand mit Ballastgewichten versehen ist.

6. Schwimmende Baugruppe gemäß Anspruch 5, wobei die Festmachleinen an dem umgebenden Wandteil befestigt sind.

7. Schwimmende Baugruppe gemäß Anspruch 1, Option (b), wobei die Festmachleinen an der Schürze an einer Position zwischen dem ersten und dem zweiten Rand befestigt sind.

8. Schwimmende Baugruppe gemäß Anspruch 7, wobei die Festmachleinen gegabelt sind, um ein erstes Gabelstück, das an der Schürze an der Position zwischen dem ersten und dem zweiten Rand befestigt ist, und ein zweites Gabelstück, das an dem umgebenden Wandteil des flexiblen Elements befestigt ist, zu definieren, wobei vorzugsweise das erste Gabelstück eine geringere Steifigkeit als das zweite Gabelstück hat.

## Revendications

1. Ensemble flottant pour la génération d'énergie solaire, comprenant un élément flexible flottant rempli de gaz (10), avec une partie paroi supérieure (1), une partie paroi inférieure (2) et une partie paroi environnante (3) reliant des bords extérieurs correspondants des parties paroi supérieure et inférieure, dans lequel, dans une position opérationnelle de l'élément flexible lorsqu'il flotte sur une surface d'eau (4), la dimension verticale de l'élément flexible est inférieure à ses dimensions horizontales, et en outre avec un ou plusieurs panneaux solaires (5) reposant sur le dessus de la partie paroi supérieure et avec des lignes d'amarrage (6) s'étendant entre l'élément flexible et un ou plusieurs points d'amarrage fixes, dans lequel l'élément flexible, au niveau de sa partie paroi environnante, est pourvu d'une jupe (7) qui s'étend sensiblement vers le bas à partir de la partie paroi environnante vers une position inférieure au niveau de la partie paroi inférieure, dans la position opérationnelle de l'élément flexible lorsqu'il flotte sur ladite surface d'eau, laquelle jupe est adaptée pour empêcher le vent de pénétrer sous l'élément flexible et dans lequel la jupe comprend une jupe avec un premier bord qui est relié à la partie paroi environnante de l'élément flexible et avec un second bord qui est également relié à l'élément flexible pour définir une enceinte pour loger de l'eau de lestage, **caractérisé en ce que** (a) le second bord de la jupe est également relié à la partie paroi environnante au niveau du même emplacement que le premier bord pour définir une enceinte sensiblement en forme de goutte, ou **en ce que** (b) le second bord de la jupe est relié à la partie paroi inférieure de l'élément flexible au niveau d'un emplacement vers l'intérieur par rapport à la partie paroi environnante.

2. Ensemble flottant selon la revendication 1, dans lequel l'enceinte est entièrement étanche.

3. Ensemble flottant selon la revendication 1,
dans lequel la jupe est pourvue d'ouvertures pour le passage d'eau, à travers la jupe, dans l'enceinte et hors de celle-ci.

4. Ensemble flottant selon la revendication 1, option (a), dans lequel les lignes d'amarrage sont fixées à ladite jupe, et de préférence à une partie jupe extérieure de celle-ci.

5. Ensemble flottant selon la revendication 1, option (b), dans lequel, au niveau d'une position entre ses premier et second bords, la jupe est pourvue de masses de lestage.

6. Ensemble flottant selon la revendication 5, dans lequel les lignes d'amarrage sont fixées à la partie paroi environnante.

7. Ensemble flottant selon la revendication 1, option (b), dans lequel les lignes d'amarrage sont fixées à la jupe au niveau d'une position entre les premier et second bords.

8. Ensemble flottant selon la revendication 7, dans lequel les lignes d'amarrage bifurquent pour définir une première fourche fixée à la jupe au niveau de ladite position entre les premier et second bords et une seconde fourche fixée à la partie paroi environnante de l'élément flexible, dans lequel de préférence la première fourche présente une rigidité inférieure à celle de la seconde fourche.
